# EUROPEAN PATENT SPECIFICATION

(11) **EP 2 664 128 B1**
(45) Date of publication and mention of the grant of the patent: **26.07.2017**
(21) Application number: 12700808.4
(22) Date of filing: 13.01.2012
(51) Int. Cl.: H04M 3/42, H04L 29/08

(54) **METHOD FOR MANAGING CONVERGED ADDRESS BOOK CAPABILITY**
VERFAHREN ZUR KAPAZITÄTSVERWALTUNG EINES KONVERGIERTEN ADRESSBUCHES
PROCÉDÉ DE GESTION D'UNE CAPACITÉ DE CARNET D'ADRESSES CONVERGENT

(30) Priority: 14.01.2011 ES 201130039 P
(43) Date of publication of application: 20.11.2013
(73) Proprietor: Telefónica, S.A., 28013 Madrid (ES)
(72) Inventor: FULLEA CARRERA, Eduardo, E-28013 Madrid (ES); GARCIA GARCIA, Laura, E-28013 Madrid (ES); SANCHEZ DASI, Jose, Juan, E-28013 Madrid (ES); NUÑEZ DIAZ, Jose, Luis, E-28013 Madrid (ES)
(74) Representative: Carpintero Lopez, Francisco
(86) International application number: PCT/EP2012/050493
(87) International publication number: WO 2012/095518

(56) References cited:
- US-A1- 2010 088 276

## Description

### TECHNICAL FIELD OF THE INVENTION

The present invention relates generally to address books and more specifically the management of converged address book capability of a user and his contacts.

### BACKGROUND OF THE INVENTION

An address book is a database used for storing entries called contacts. Current telecommunication standards defined in the Open Mobile Alliance (OMA), namely the OMA CAB (Converged Address Book) Enabler, provide a framework for storing user's address book in a network repository and keep it synchronized with the contact lists of the different devices of the user.

Most people have many different address books: their email accounts, their mobile phone, and the "friends lists" on their social networks. A Network Address Book allows them to organize and manage all of their address books through a single interface and share their contacts across their different address books and social networks.

In addition, the CAB enabler provides mechanisms to keep always up-to-date the contact information stored in the user's address book. This is achieved by allowing the users to define a personal profile (Personal Contact Card) with their contact information that other users can subscribe, so that they receive notifications when this information changes and can thus have the most up-to-date contact information in their address books.

The process to subscribe to another user's Personal Contact Card (PCC) is as follows:
- The user adds the new contact that he/she wants to subscribe by adding his/her CAB identifier (CAB XUI) to the subscription list stored in the CAB XDMS.
- Later on the CAB Server retrieves the subscription list and issues subscription requests towards the PCC XDMS where the PCCs of the contacts in the subscription list are stored.
- In case there is a rule for automatic handling of this requests, either for accepting or for rejecting them, it is applied,
- Otherwise the end user is asked for confirmation, using the reactive authorization mechanism.

This mechanism is just valid when the contacts to be subscribed are CAB-enabled users. In order to facilitate the discovery of which contacts in a user's address book are CAB-enabled users the CAB contact information data model includes the element <contact-type> for encoding the CAB capability support. Therefore all the contacts with this element set to an appropriate value ("CAB") are certainly CAB-enabled users and therefore are suitable for receiving PCC subscription requests. This information element indicating CAB capability is synchronized between CAB Server and Client as part of the user's address book. 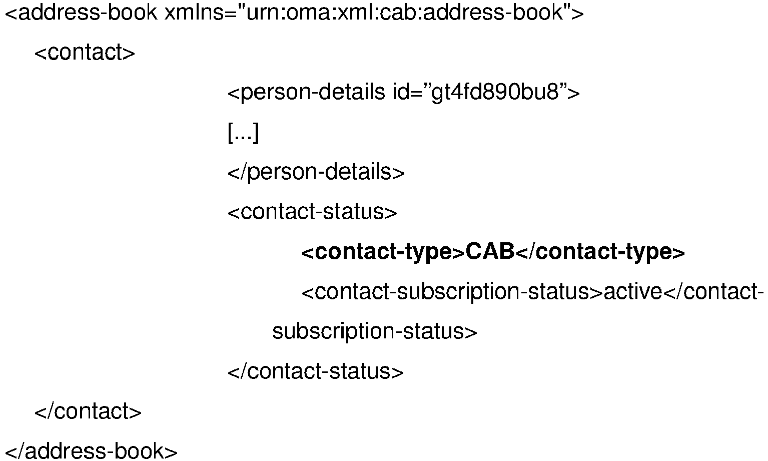 OMA CAB enabler is based on standard technologies and protocols like SIP, XDM and OMA DS.

In addition to the standards, the patent request US2010088276A1 describes a framework by means of which a user indicates a list of contacts in his/her address book for which the user wants to receive automatic updates. A Subscription Function is in charge of subscribing to the Personal Contact Card of that set of contacts and applying the corresponding personalization rules to the updated contact information prior to updating the address book of the user. This patent request also proposes the use of a unified user identifier for both the Presence and the Converged Address Book services, so that the Presence and the contact information for each address book entry can be merged, but this cannot be considered an universal solution for conveying to a user the identifier of his/her contacts for the CAB service, because it cannot be assumed that there is a universal correspondence between both identifiers at each and every system.

Patent request WO2010033669A1 describes a converged address book system that allows a user to subscribe to other user's contact information, allowing that user to receive automatic updates of other converged address book user's available personal contact card information (PCC). The described system also allows a converged address book user to share his or her contact information with other users through a messaging scheme. Such information can include the user's personal contact card, address book data, or both within the user's address book. The system also allows the converged address book user to import data into the converged address book from other (non-CAB) address book data sources. Another feature of the described system is a mechanism to search for contact information from within the host converged address book system, remote converged address book system and/or external databases made available by a service provider.

Patent request WO2009154973A2 describes a converged address book system comprising a CAB Client that manages contact information and keeps it synchronized with a CAB Server through a synchronization interface. The system presents an additional interface between the CAB Client and the CAB Server that aims at implementing additional functionality like subscribing to a user's contacts in the address book, data management (e.g. publishing information and managing changes in information), interaction with legacy systems (e.g. import), sharing, and searching contact information.

On the other hand, Presence service is aimed at disseminating Presence Information, subject to the permissions granted by the owner of this information. The Presence service is defined by OMA in the OMA Presence Enabler, which is based on multiple related RFCs specified by the Internet Engineering Task Force (IETF).

The presence information of a user of the Presence service (presentity) comprises data about:
- the user itself (<person>), e.g. overall willingness for any kind of communication, his/her physical appearance and mood,
- the ways of communication used by the user (<tuple>), e.g. willingness to communicate with service A, the availability of service B in his/her terminal,
- the devices he/she uses (<device>), like mobile phones, PCs and PDAs. There is a many to many mapping of services to devices as the same services may execute in multiple devices.

The OMA Presence data model is an XML document that conforms to the Presence Information Data Format defined by the IETF in the RFC3863, with some other extensions defined by the OMA in the Presence SIMPLE Data Specification.

The Presence Server is in charge of accepting presence publications by the presentities, composing the presence document and delivering the presence information to the watchers according to the permissions granted by the presentities.

The presence information can be provided by a presentity by one or both of these mechanisms:
- Publication of Presence Information to the Presence Server using SIP
- Manipulation of Permanent Presence State, stored at the Presence XDMS using XCAP

The first one is very well suited for publishing presence information that is rather dynamic and thus changing over the time. On the other hand the latter one is best suited for presence information that does not change very often.

The Presence Server composes the presence document of a user taking as a source the Permanent Presence State as well as the presence information published to the Presence Server from the different devices of a user.
OMA Presence enabler is based on standard technologies and protocols like SIP and XDM.

Although the CAB enabler describes the way to encode the CAB capability of the different contacts in the user's address book, it is left out of the scope of CAB's enabler the specification of a method to actually determine if this capability exists for the different contacts. This can be quite straightforward for those contacts belonging to the same domain. However a solution is needed for checking the CAB-capability of those contacts belonging to other domains. If there is no standard mechanism for a CAB Server to determine whether the contacts in a user's address book belonging to different domains are CAB-enabled then it will not be able to set the corresponding flag in the address book and therefore the user will not be aware of which contacts are CAB-enabled.

In addition to the previous issue a mechanism is needed to determine the specific address among the different addresses in an address book entry that identifies the user for the purpose of the CAB service.

### SUMMARY OF THE INVENTION

The present invention serves to solve the aforesaid problem by providing a method for managing a converged address book capability of a user with an address book. The user is subscribed to a converged address book service and the method allows him to indicate his own CAB capability to other users and to know the converged address book capability of his contacts, that is whether they support a converged address book service. In turn a user identifier is provided to other users allowing them to subscribe to his Personal Contact Card.

A first aspect of the invention refers to the method comprising the next steps:
- defining a service tuple associated to a CAB enabler in a presence document stored in a presence server. The inclusion of this service tuple in the user's Presence Document with status set to "open" indicates the capability of the user for the CAB service, and it provides the user's XUI in the contact address field, thus allowing other users to subscribe to his/her PCC.
- setting a value of converged address book capability in the service tuple indicating whether converged address book service is supported by the user;
- publishing in the presence server the converged address book capability of the user and a user identifier on the converged address book service;
- receiving in a converged address book capability function module updates from the presence server of converged address capabilities of the contacts of the users;
- updating a network address book, stored in a converged address book XML document management server, with both the converged address book capabilities and converged address book service address of the plurality of contacts and an indication that this information was obtained by means of the presence enabler.

These steps may be performed by a Converged Address Book capability function module, in charge of creating, publishing and updating this information, connected to a converged address book server or directly implemented within the converged address book server. Thus, it is available for other CAB clients.

There are proposed two ways of publishing the converged address book capability of the user, it can be achieved by sending a "sip publish" request to the presence server or directly modifying a permanent presence state stored in a XML document management server.

Additionally, the method of the invention sends a subscription request to each of the new contacts of the address book notified by the converged address book server. The request is preferably an anonymous request.

Optionally, the method issues subscription requests as coming from the converged address book client which stores a contact, whose presence information is being requested, in the address book of the user.

Optionally, the method issues subscription requests as coming from the converged address book capability function.

A second aspect of the invention refers to how the method manages presence information updates. When a presence information update is received, the method analyses whether the converged address book capability have been obtained by a presence enabler.

The method may remove the converged address book capability and the user identifier from the converged address book XML document management server, when a converged address book capability has been obtained by a presence enabler and a presence information update is received with no service tuple.

The method may remove the converged address book capability and the user identifier from the converged address book XML document management server when a converged address book capability was obtained by a presence enabler and a presence information update is received with a value of the service tuple indicating that said user does not support converged address book service anymore.

The method may remove the information of converged address book capability from the presence document when the user is not served anymore by the converged address book server.

Also a computer program is provided in order to perform the steps of the method running on a general purpose processor, a digital signal processor, a FPGA, an ASIC, a micro-processor, a micro-controller, or any other form of programmable hardware.

The above features and advantages do not limit the present invention, and those skilled in the art will recognize additional features and advantages upon reading the following detailed description, and upon viewing the accompanying drawings.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1** depicts a simplified architecture of the elements involved in the system where the method is applied, including a CAB capability function module.
**Figure 2** shows a flow chart representing how the publishing of Converged Address Book capability of new users within a CAB server is managed.
**Figure 3** shows a flow chart which depicts how presence subscriptions for new contacts are managed.
**Figure 4** shows a flow charts which depicts how Presence Information updates are managed by the CAB capability function.

### DETAILED DESCRIPTION OF THE INVENTION

This invention provides a mechanism for indicating the CAB capability of a user to other users, based on the OMA Presence SIMPLE Enabler. The description of the embodiments comprises the presentation of a system and the required method to manage and enable the publishing of the information about the CAB capability of users, as well as a service tuple in the Presence Document that stores this information and enables the integration with the Presence enabler.

A module is defined in this invention, namely the CAB Capability Function, which can be part of the CAB Server. The CAB Capability Function is in charge of the interaction with the Presence XDMS, the Presence Server and the CAB XDMS in order to carry out the next functions:
- publish the CAB capability of new users as a service tuple in the corresponding Presence Document, every time a new user is provisioned in the CAB server.
- update the corresponding Presence Document to remove the CAB capability information when a user is not served any more by the CAB server (server unsubscription, temporal denial of services...).
- receive updates regarding CAB capability from the contacts of served users
- make the corresponding updates in the network address book to reflect the capabilities of the different users, and an indication that this information was obtained by means of the Presence Enabler.

The service tuple for the CAB capability defined by this invention includes an identifier of the CAB enabler in the <tuple><op:service-description><op:service-id> element. The preferred value for this element is org.openmobilealliance:CAB, but the present invention is not limited to this.
It also includes the XML Configuration Access Protocol User Identifier (XUI) for the CAB service in the <tuple><contact> element, i.e. the SIP URI or TEL URI identifying the user.

This is an example of a valid tuple for the CAB service:

```
 <tuple id="a1232">
 <status>
                   <basic>open</basic>
 </status>
 <op:willingness>
                   <op:basic>open</op:basic>
 </op:willingness>
 <op:service-description>
                   <op:service-id>org.openmobilealliance:CAB</op:service-id>
                <op:version>1.0</op:version>
              <op:description>This is the OMA Converged Address Book
           service</op:description>
 </op:service-description>
 <contact>sip:someone@example.com</contact>
 </tuple>
```

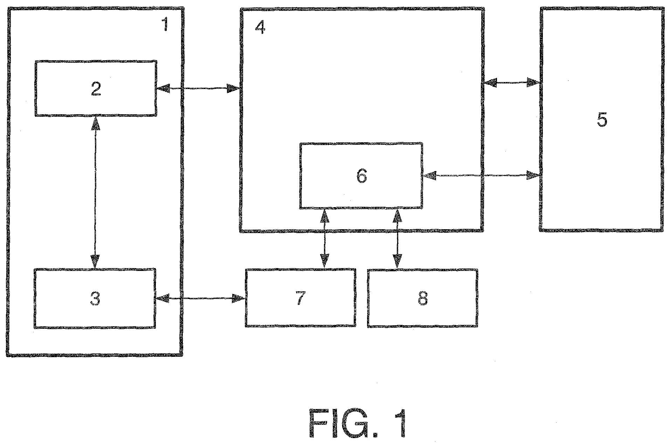

**Figure 1** depicts a simplified architecture of the elements that are involved in the mechanisms defined by the present invention and that includes the CAB Capability Function Module. The rest of the elements are well known in the state of the art.

These are the elements that are located at the User Equipment's (1) (UE) side:
- **CAB Client** (2): This element implements the logics of the CAB Enabler at the UE side, e.g. synchronization of the Address Book with the CAB Server, managing PCC information or contact subscription interactions.
- **Presence Watcher** (3): this element is in charge of subscribing to presentities's Presence information and managing the Presence updates received for presentation to the user.

And these are the elements located at the server side:
- **CAB Server** (4): this element implements the logics of the CAB Enabler at the server side, e.g. synchronization of the Address Book with the CAB client and performing the corresponding updates at the CAB XDMS, managing subscription to PCCs.
- **CAB XDMS** (5): a repository of XML documents that stores information related to the CAB service (e.g. users' address book, user preferences, etc).
- **CAB Capability Function** (6): the new element defined by this invention that is preferably, but not necessarily, built as part of the CAB Server. This element supports all the logic related to publication of the CAB capability as Permanent Presence State to the Presence XDMS, or as a regular SIP Publish to the Presence Server. It also subscribes to the Presence information of the contacts of the users that it serves in order to receive their CAB capability as part of the Presence information updates.
- **Presence Server** (7): this element is responsible of managing the subscription requests that it receives, applying the authorization rules defined by the owners of the presence information, composing the presence document, and providing back the presence updates to the watchers.
- **Presence XDMS** (8): this element stores the Permanent Presence State, the Presence Subscription Rules and the Presence Publication Rules.

This invention comprises two steps, the first one being the publication by the CAB Capability Function to the Presence Server of the CAB Capability once a user becomes CAB Capable. The second step is the population of this "CAB-capable" flag to the Address Book of the CAB users that have the new CAB user as a contact.

In a preferred embodiment the CAB Capability Function publishes the corresponding CAB capability in the presence state document of a user that becomes CAB-capable.

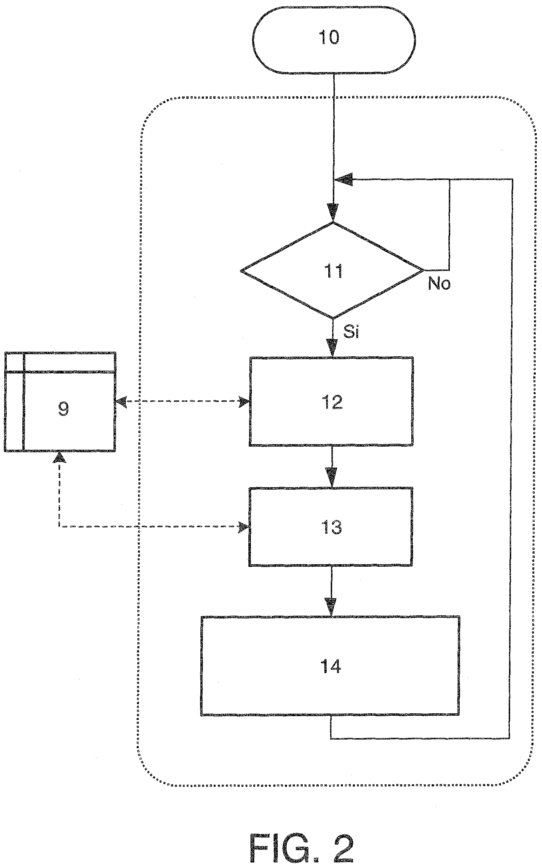

**Figure 2** details the steps to manage the publishing of CAB capability of a user who, at a specific point in time, becomes CAB-capable (10) (e.g. purchases a capable device, registers to the service, etc) within the CAB Server, performed by the CAB Capability Function:
- A "new user" event (11) is trigger within the CAB Server, launching a provisioning process of the new user within the CAB enabler. The CAB Capability Function is continuously listening to new provisioning events, so when a new user is provisioned in the system it obtains the required information and launches a process to update the CAB capability publication in the presence server.
- (12) The CAB Capability Function obtains the information (9) of the new user required to properly update the information in the presence document, specifically the XCAP User Identifier (XUI) for the CAB XDM Server, which has been associated by the CAB server during provisioning of the user.
- (13) The CAB Capability Function obtains the required information (9) about the Presence XDMS in order to be able to send the update request in the next step. This information is provisioned at set-up stage of the CAB Capability Function, and then used for each publication of CAB capability.
- (14) The CAB Capability Function sends a request to the Presence XDMS to modify the Permanent Presence State associated to that user, which is stored in the Presence XDMS, to include the new CAB service tuple. This tuple has the status set to "open" and includes the XUI of the user for the CAB service which allows other users to subscribe to his/her PCC.

The CAB Capability Function may, according to service provider policies, not publish the CAB capability until the user actually creates the corresponding PCC, as this is the point when other users can start to fully benefit from the fact that this user has subscribed to the service (i.e. other users can subscribe to his/her PCC).

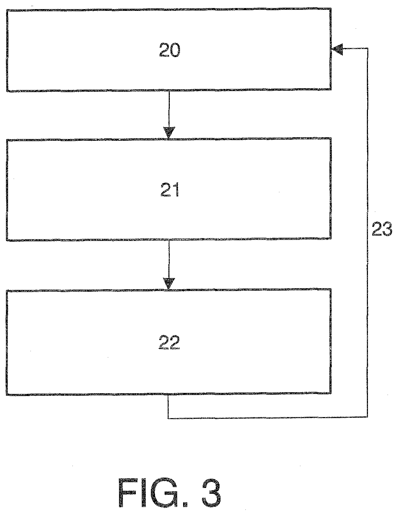

**Figure 3** represents the process by which the CAB Capability Function subscribes to the contacts of the users it serves in order to determine which of them is CAB capable and to add this information to the user's address book:
- The regular status for the CAB Capability Function is the waiting mode (20) for Presence Information Updates or for new contacts addition to the address book.
- At a specific point in time the CAB Server identifies (21) that there are new addresses in the address book of a user (e.g. new contacts added at the device are synchronized to the CAB Server, or address book synchronized for the very first time).
- Then the CAB Server notifies the CAB Capability Function which issues a Presence subscription request for each of the new addresses (22). The subscription will preferably be an anonymous presence request or alternatively a subscription on behalf of the user or the CAB Capability Function itself. The subscription may be a single fetch operation (subscription with expires attribute set to zero) that receives a single notify, or alternatively an actual subscription lasting for a certain period of time or permanently.
- Then the CAB Capability Function returns (23) to waiting mode for Presence Information Updates or for new contacts addition to the address book.

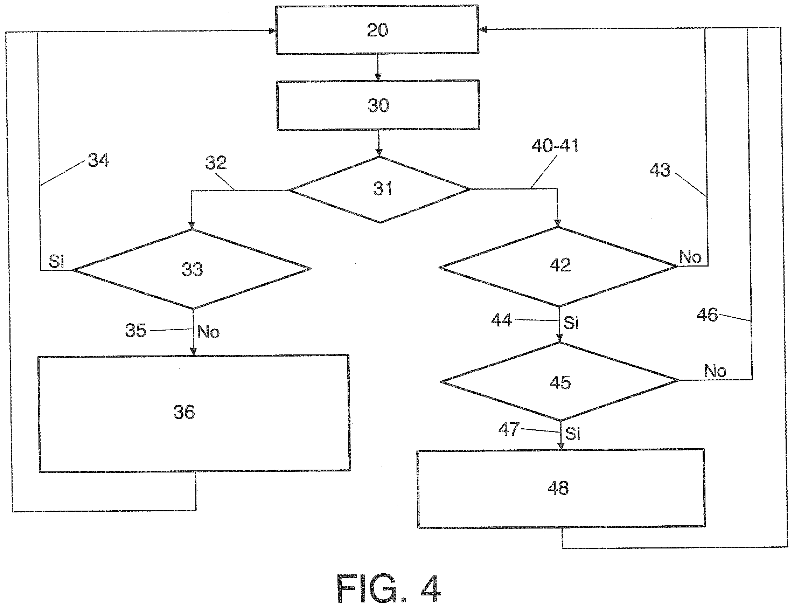

**Figure 4** represents the process by which the CAB Capability Function module receives a Presence Information Update and how it proceeds with regards to the CAB capability:
- The CAB Capability Function module is in a waiting mode for Presence Information Updates or for new contacts addition to the address book.
- When a Presence Information updated is received (30), the CAB Capability Function module checks (31) whether the Presence Document received includes the CAB service tuple:
   ∘ If it includes the CAB service with status set to "open" (32), then it checks (33) whether the user was already identified as CAB Capable.
      ▪ If yes (34) then it returns to the waiting mode.
      ▪ If not (35), the CAB Capability Function module modifies (36) the address book entry corresponding to that presence update at the CAB XDMS as follows before coming back to the waiting mode:
         - Setting the contact type to CAB user type by setting the "contact-type" element to "CAB"
         - Setting the source of the previous information to "Presence" by modifying the "source" attribute, newly defined by this invention, of the "contact-type" element
         - Adding the XUI as the CAB XUI of the user, by setting the "xui-type" attribute of the corresponding address to be used as CAB XUI to the value "CAB"
   ∘ If on the contrary the CAB service is not present (40) or it has the status set to "closed" (41), then it checks (42) whether the user was already identified as CAB Capable.
      ▪ If not (43) then it returns to the waiting mode
      ▪ If yes (44) it further checks (45) whether the CAB Capability was obtained by means of the Presence Enabler, i.e. newly defined "source" attribute of the "contact-type" element set to "Presence".
         - If not (46) then it returns to the waiting mode
         - If yes (47) then the CAB Capability Function module modifies (48) the address book entry corresponding to that presence update at the CAB XDMS as follows before coming back to the waiting mode:
            ∘ Removing "contact-type" element altogether
            ∘ Removing the "xui-type" attribute with value "CAB"
   • The CAB Capability Function module keeps on waiting for Presence information updates.

The following is an example of a contact entry that has been updated to reflect the CAB capability of that contact:

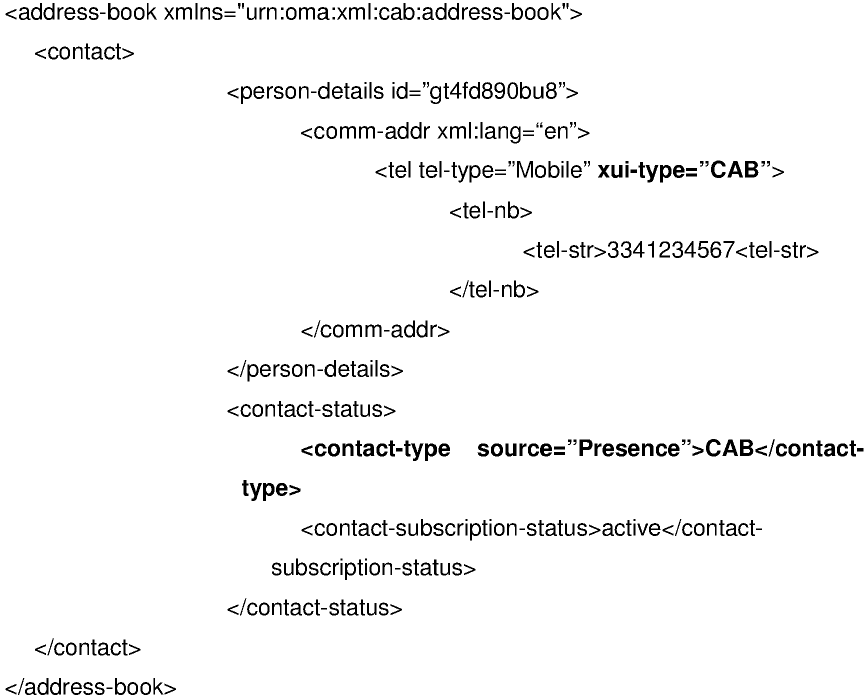

At any point during the previous flow, address book synchronization may be performed according to the usual CAB Enabler policy and user preferences. When it occurs all the changes made at the CAB XDMS are populated to the CAB Client and the user will become aware that some of his/her contacts are CAB capable.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. Method for managing a converged address book capability of a user with an address book which includes a plurality of contacts, said user is subscribed to a converged address book service, wherein a service tuple associated to a presence enabler in a presence document stored in a presence server is defined and the method is comprising the next steps:
a) setting a value of converged address book capability in the service tuple indicating whether the converged address book service is supported by the user (14);
b) publishing (14) in the presence server both the converged address book capability of the user and a user identifier on the converged address book service;
c) receiving in a converged address book capability function module updates (30) from the presence server of converged address capabilities of the plurality of contacts of the user;
d) updating (36,48) a network address book, stored in a converged address book XML document management server, with both the converged address book capabilities and converged address book service address of the plurality of contacts and an indication that this information was obtained by means of the presence enabler.

2. Method according to claim 1 wherein steps a-d are performed by the converged address book capability function module connected with the converged address book server.

3. Method according to claim 1 wherein steps a-d are performed in the converged address book capability function module implemented within the converged address book server.

4. Method of claim 1, 2 or 3 wherein the publication of the converged address book capability of the user and the user identifier is achieved sending a request to a presence XML document management server to modify a permanent presence state.

5. Method according to claim 1, 2 or 3 wherein the publication of a converged address book capability of a user and the user identifier is achieved sending a "sip publish" request to the presence server.

6. Method according to any one of previous claims further comprising the converged address book capability function module sending a subscription request to each of the new contacts of the address book notified by the converged address book server.

7. Method according to claim 6 wherein the subscription request is an anonymous presence request.

8. Method according to claim 6 wherein the subscription request is issued as coming from a converged address book client which stores a contact, whose presence information is being requested, in the address book of the user.

9. Method according to claim 6 wherein the subscription request is issued as coming from the converged address book capability function module.

10. Method according to any one of previous claims further comprising analysing whether the converged address book capability have been obtained by a presence enabler.

11. Method according to claim 10 further comprising removing the converged address-book capability and the user identifier from the converged address book XML document management server when a converged address book capability was obtained by a presence enabler and a presence information update is received with no service tuple.

12. Method according to claim 10 further comprising removing the converged address book capability and the user identifier from the converged address book XML document management server when a converged address book capability was obtained by a presence enabler and a presence information update is received with a value of the service tuple indicating that said user does not support converged address book service anymore.

13. Method according to claims any one of previous claims further comprising removing the information of converged address book capability from the presence document when the user is not served anymore by the converged address book server.

14. A computer program comprising program code means adapted to perform the steps of the method according to any claims from 1 to 13, when said program is run on a general purpose processor, a digital signal processor, a FPGA, an ASIC, a micro-processor, a micro-controller, or any other form of programmable hardware.

## Patentansprüche

1. Verfahren zum Verwalten einer Zusammengeführtes-Adressbuch-Fähigkeit eines Benutzers mit einem Adressbuch, das eine Mehrzahl von Kontakten beinhaltet, wobei der Benutzer an einem Zusammengeführtes-Adressbuch-Dienst teilnimmt, wobei ein Dienst-Tupel, das einem Präsenz-Befähiger in einem Präsenz-Dokument zugeordnet ist, das in einem Präsenz-Server gespeichert ist, definiert ist und das Verfahren folgende nächste Schritte aufweist:
a) Einstellen eines Werts einer Zusammengeführtes-Adressbuch-Fähigkeit in dem Dienst-Tupel, der anzeigt, ob der Zusammengeführtes-Adressbuch-Dienst durch den Benutzer (14) unterstützt wird;
b) Veröffentlichen (14) sowohl der Zusammengeführtes-Adressbuch-Fähigkeit des Benutzers als auch eines Benutzeridentifizierers auf dem Zusammengeführtes-Adressbuch-Dienst in dem Präsenz-Server;
c) Empfangen von Aktualisierungen (30) von dem Präsenz-Server von Zusammengeführte-Adresse-Fähigkeiten der Mehrzahl von Kontakten des Benutzers in einem Zusammengeführtes-Adressbuch-Fähigkeit-Funktionsmodul;
d) Aktualisieren (36, 48) eines Netzadressbuchs, das in einem Zusammengeführtes-Adressbuch-XML-Dokument-Verwaltungsserver gespeichert ist, mit sowohl den Zusammengeführtes-Adressbuch-Fähigkeiten als auch der Zusammengeführtes-Adressbuch-Dienst-Adresse der Mehrzahl von Kontakten und einer Anzeige, dass diese Informationen mittels des Präsenz-Befähigers erhalten wurden.

2. Verfahren gemäß Anspruch 1, bei dem die Schritte a - d durch das Zusammengeführtes-Adressbuch-Fähigkeit-Funktionsmodul durchgeführt werden, das mit dem Zusammengeführtes-Adressbuch-Server verbunden ist.

3. Verfahren gemäß Anspruch 1, bei dem die Schritte a - d in dem Zusammengeführtes-Adressbuch-Fähigkeit-Funktionsmodul durchgeführt werden, das innerhalb des Zusammengeführtes-Adressbuch-Servers implementiert ist.

4. Verfahren gemäß Anspruch 1, 2 oder 3, bei dem die Veröffentlichung der Zusammengeführtes-Adressbuch-Fähigkeit des Benutzers und des Benutzeridentifizierers unter Senden einer Anfrage an einen Präsenz-XML-Dokument-Verwaltungsserver erzielt wird, um einen dauerhaften Präsenz-Status zu modifizieren.

5. Verfahren gemäß Anspruch 1, 2 oder 3, bei dem die Veröffentlichung einer Zusammengeführtes-Adressbuch-Fähigkeit eines Benutzers und des Benutzeridentifizierers unter Senden einer "sip-Veröffentlichung"-Anfrage an den Präsenz-Server erzielt wird.

6. Verfahren gemäß einem der vorherigen Ansprüche, das ferner den Schritt aufweist, dass das Zusammengeführtes-Adressbuch-Fähigkeit-Funktionsmodul eine Teilnahmeanfrage an jeden der neuen Kontakte des Adressbuchs sendet, der durch den Zusammengeführtes-Adressbuch-Server benachrichtigt wird.

7. Verfahren gemäß Anspruch 6, bei dem die Teilnahmeanfrage eine anonyme Präsenz-Anfrage ist.

8. Verfahren gemäß Anspruch 6, bei dem die Teilnahmeanfrage als von einem Zusammengeführtes-Adressbuch-Client kommend ausgegeben wird, der einen Kontakt, dessen Präsenz-Informationen angefordert werden, in dem Adressbuch des Benutzers speichert.

9. Verfahren gemäß Anspruch 6, bei dem die Teilnahmeanfrage als von dem Zusammengeführtes-Adressbuch-Fähigkeit-Funktionsmodul kommend ausgegeben wird.

10. Verfahren gemäß einem der vorherigen Ansprüche, das ferner ein Analysieren, ob die Zusammengeführtes-Adressbuch-Fähigkeit durch einen Präsenz-Befähiger erhalten wurde, aufweist.

11. Verfahren gemäß Anspruch 10, das ferner ein Entfernen der Zusammengeführtes-Adressbuch-Fähigkeit und des Benutzeridentifizierers aus dem Zusammengeführtes-Adressbuch-XML-Dokument-Verwaltungsserver aufweist, wenn eine Zusammengeführtes-Adressbuch-Fähigkeit durch einen Präsenz-Befähiger erhalten wurde und eine Präsenz-Informationsaktualisierung ohne Dienst-Tupel empfangen wird.

12. Verfahren gemäß Anspruch 10, das ferner ein Entfernen der Zusammengeführtes-Adressbuch-Fähigkeit und des Benutzeridentifizierers aus dem Zusammengeführtes-Adressbuch-XML-Dokument-Verwaltungsserver aufweist, wenn eine Zusammengeführtes-Adressbuch-Fähigkeit durch einen Präsenz-Befähiger erhalten wurde und eine Präsenz-Informationsaktualisierung mit einem Wert des Dienst-Tupels empfangen wird, der anzeigt, dass der Benutzer den Zusammengeführtes-Adressbuch-Dienst nicht mehr unterstützt.

13. Verfahren gemäß einem der vorherigen Ansprüche, das ferner ein Entfernen der Informationen der Zusammengeführtes-Adressbuch-Fähigkeit aus dem Präsenz-Dokument aufweist, wenn der Benutzer nicht mehr durch den Zusammengeführtes-Adressbuch-Dienst bedient wird.

14. Ein Computerprogramm mit einer Programmcodeeinrichtung, angepasst, um die Schritte des Verfahrens gemäß einem der Ansprüche 1 bis 13 durchzuführen, wenn das Programm auf einem Universalprozessor, einem Digitalsignalprozessor, einem FPGA, einer ASIC, einem Mikroprozessor, einer Mikrosteuerung oder einer beliebigen anderen Form programmierbarer Hardware läuft.

## Revendications

1. Un procédé de gestion d'une capacité de carnet d'adresses convergent d'un utilisateur avec un carnet d'adresses qui contient une pluralité de contacts, ledit utilisateur étant abonné à un service de carnet d'adresses convergent, dans lequel un tuple de service associé à un activateur de présence dans un document de présence conservé en mémoire dans un serveur de présence est défini et le procédé comprenant les étapes suivantes :
a) la définition d'une valeur de capacité de carnet d'adresses convergent dans le tuple de service indiquant si le service de carnet d'adresses convergent est pris en charge par l'utilisateur (14),
b) la publication (14) dans le serveur de présence à la fois de la capacité de carnet d'adresses convergent de l'utilisateur et d'un identifiant d'utilisateur auprès du service de carnet d'adresses convergent,
c) la réception dans un module de fonction de capacité de carnet d'adresses convergent d'actualisations (30) à partir du serveur de présence de capacités de carnet d'adresses convergent de la pluralité de contacts de l'utilisateur,
d) l'actualisation (36, 48) d'un carnet d'adresses de réseau, conservé en mémoire dans un serveur de gestion de documents XML de carnet d'adresses convergent, avec à la fois les capacités de carnet d'adresses convergent et l'adresse de service de carnet d'adresses convergent de la pluralité de contacts et une indication que ces informations ont été obtenues au moyen de l'activateur de présence.

2. Le procédé selon la revendication 1 dans lequel les étapes a-d sont exécutées par le module de fonction de capacité de carnet d'adresses convergent raccordé au serveur de carnet d'adresses convergent.

3. Le procédé selon la revendication 1 dans lequel les étapes a-d sont exécutées dans le module de fonction de capacité de carnet d'adresses convergent mis en oeuvre à l'intérieur du serveur de carnet d'adresses convergent.

4. Le procédé selon la revendication 1, 2 ou 3 dans lequel la publication de la capacité de carnet d'adresses convergent de l'utilisateur et de l'identifiant d'utilisateur est réalisée par l'envoi d'une demande à un serveur de gestion de documents XML de présence destinée à la modification d'un état de présence permanente.

5. Le procédé selon la revendication 1, 2 ou 3 dans lequel la publication d'une capacité de carnet d'adresses convergent d'un utilisateur et de l'identifiant d'utilisateur est réalisée par l'envoi d'une demande "sip publish" au serveur de présence.

6. Le procédé selon l'une quelconque des revendications précédentes comprenant en outre l'envoi par le module de fonction de capacité de carnet d'adresses convergent d'une demande d'abonnement à chacun des nouveaux contacts du carnet d'adresses notifiés par le serveur de carnet d'adresses convergent.

7. Le procédé selon la revendication 6 dans lequel la demande d'abonnement est une demande de présence anonyme.

8. Le procédé selon la revendication 6 dans lequel la demande d'abonnement est émise à partir d'un client de carnet d'adresses convergent qui conserve en mémoire un contact, dont les informations de présence sont demandées, dans le carnet d'adresses de l'utilisateur.

9. Le procédé selon la revendication 6 dans lequel la demande d'abonnement est émise à partir du module de fonction de capacité de carnet d'adresses convergent.

10. Le procédé selon l'une quelconque des revendications précédentes comprenant en outre l'analyse si la capacité de carnet d'adresses convergent a été obtenue par un activateur de présence.

11. Le procédé selon la revendication 10 comprenant en outre la suppression de la capacité de carnet d'adresses convergent et de l'identifiant d'utilisateur du serveur de gestion de documents XML de carnet d'adresses convergent lorsqu'une capacité de carnet d'adresses convergent a été obtenue par un activateur de présence et qu'une actualisation d'informations de présence est reçue sans tuple de service.

12. Le procédé selon la revendication 10 comprenant en outre la suppression de la capacité de carnet d'adresses convergent et de l'identifiant d'utilisateur du serveur de gestion de documents XML de carnet d'adresses convergent lorsqu'une capacité de carnet d'adresses convergent a été obtenue par un activateur de présence et qu'une actualisation d'informations de présence est reçue avec une valeur du tuple de service indiquant que ledit utilisateur ne prend plus en charge un service de carnet d'adresses convergent.

13. Le procédé selon l'une quelconque des revendications précédentes comprenant en outre la suppression des informations de capacité de carnet d'adresses convergent du document de présence lorsque l'utilisateur n'est plus desservi par le serveur de carnet d'adresses convergent.

14. Un programme informatique contenant un moyen de code de programme adapté de façon à exécuter les étapes du procédé selon l'une quelconque des revendications 1 à 13, lorsque ledit programme est exécuté sur un processeur universel, un processeur de signaux numériques, un FPGA, un ASIC, a microprocesseur, un microcontrôleur ou toute autre forme de matériel informatique programmable.
